# EUROPÄISCHE PATENTANMELDUNG

(11) **EP 4 001 179 A1**
(43) Veröffentlichungstag der Anmeldung: **25.05.2022**
(21) Anmeldenummer: 21206726.8
(22) Anmeldetag: 05.11.2021
(51) Int. Cl.: B65G 17/12, B65G 17/36, B65G 45/14, F26B 25/00

(54) **HÖHENFÖRDERER FÜR EINE VORRICHTUNG ZUM TROCKNEN VON MATERIAL UND VORRICHTUNG ZUM TROCKNEN VON MATERIAL**

(30) Priorität: 17.11.2020 DE 102020130300
(71) Anmelder: Boehm Dryrun GmbH, 98544 Zella-Mehlis (DE)
(72) Erfinder: Hellmuth, Felix, 96450 Coburg (DE)
(74) Vertreter: 2s-ip Schramm Schneider Bertagnoll Patent- und Rechtsanwälte Part mbB

(57) **Zusammenfassung**

Die Erfindung betrifft einen Höhenförderer (100) für eine Vorrichtung zum Trocknen von Material und eine solche Vorrichtung. Der Höhenförderer (100) ist zum Befördern des Materials von einem unten am Höhenförderer (100) angeordneten Lager (200) zu wenigstens einer oben am Höhenförderer angeordneten Trocknungsfläche (300) vorgesehen und/oder ausgebildet. Der Höhenförderer weist eine Materialaufnahme (110) in einem unteren Bereich und eine Materialabgabe (120) in einem oberen Bereich auf, wobei der Höheförderer wenigstens einen Mitnehmer (130) zur Mitnahme von Material und eine Förderstrecke (140) aufweist, wobei der Mitnehmer (130) an der Förderstrecke (14) angeordnet ist und mittels der Förderstrecke (140) in einer vorgesehenen Förderrichtung (FR) von der Materialaufnahme (110) zu der Materialabgabe (120) und von der Materialabgabe (120) zurück zur Materialaufnahme (110) befördert wird oder beförderbar ist, wobei die Förderstrecke (140) eine Zuführstrecke (141) und eine Rückführstrecke (142) aufweist, wobei die Zuführstrecke (141) zwischen der Materialaufnahme (110) und der Materialabgabe (120) angeordnet ist und wobei die Rückführstrecke (142) zwischen der Materialabgabe (120) und der Materialaufnahme (110) angeordnet ist, so dass die Förderstrecke (140) einen Kreislauf ausbildet.

Die Erfindung ist dadurch gekennzeichnet, dass der Höhenförderer (100) eine Abstreifvorrichtung (400) zum Abstreifen von am oder auf dem Mitnehmer (130) befindlichem Material aufweist.

## Beschreibung

Die Erfindung betrifft einen Höhenförderer für eine Vorrichtung zum Trocknen von Material und eine Vorrichtung zum Trocken von Material.

Der Höhenförderer ist vorgesehen und/oder ausgebildet für eine Vorrichtung zum Trocknen von Material, insbesondere Biomasse, wie etwa Klärschlamm, Milchschlamm, Biertreber, Gärreste, Gülle, Tiergülle oder Biogasgülle. Bei dem Material kann es sich auch um befeuchtete oder Feuchtigkeit enthaltende Masse oder Schlamm oder befeuchtete oder Feuchtigkeit enthaltende Granulate, wie etwa Metallspäne oder Hackschnitzel, handeln.

Zur Trocknung von Material, insbesondere Biomasse wie Klärschlamm wird dieser in einer Ebene auf zumindest einer Trocknungsfläche (auch: Trockenfläche, Trocknungsebene) möglichst gleichmäßig verteilt, um anschließend insbesondere unter dem Einfluss von Sonnenstrahlung zu trocknen. Hierbei kann es sich insbesondere als hilfreich erweisen, die Biomasse schichtartig auf die Trocknungsfläche aufzubringen. Der Trocknungsvorgang erfolgt typischerweise in hierzu geeigneten Gebäuden, die insbesondere hallenartig oder nach Art von Gewächshäusern ausgebildet und entsprechend groß dimensioniert sind. Die Trocknungsflächen bei bekannten Anlagen können insbesondere Längen von mehr als 100 Meter aufweisen.

Vorrichtungen zum Trocken von Material umfassen vorteilhafterweise mehrere übereinander angeordnete Trocknungsflächen, auf die Feuchtigkeit enthaltendes Material, insbesondere Biomasse, zum Trocknen flächig ausbringbar ist. Somit besteht die Anforderung das Material, welches üblicherweise in einem Lager bereitgestellt wird, welches beispielsweise auf Bodenhöhe angeordnet ist, von dem Lager auf die zuoberst oder oben angeordnete Trocknungsfläche zu befördern.

Begriffe wie "vertikal", "horizontal", "oben" oder "unten" sollen im Rahmen dieser Spezifikation im herkömmlichen Sinne mit Bezug auf das Schwerefeld der Erde verstanden werden. Die Trocknungsfläche erstreckt sich typischerweise im Wesentlichen in einer horizontalen Ebene. Das Lager und zumindest eine der Trocknungsflächen weisen typischerweise einen vertikalen Abstand zueinander auf.

Der erfindungsgemäße Höhenförderer ist dazu vorgesehen und/oder ausgebildet das Material von einem in vertikaler Erstreckung unten am Höhenförderer angeordneten Lager der Vorrichtung zu einer in vertikaler Erstreckung oben am Höhenförderer angeordneten Trocknungsfläche der Vorrichtung zu befördern.

Der erfindungsgemäße Höhenförderer weist eine Materialaufnahme in einem in vertikaler Erstreckung unteren Bereich und eine Materialabgabe in einem in vertikaler Erstreckung oberen Bereich auf. Ferner weist der Höheförderer wenigstens einen Mitnehmer zur Mitnahme von Material und eine Förderstrecke für den Mitnehmer auf, wobei der Mitnehmer an der Förderstrecke angeordnet ist und mittels der Förderstrecke in einer vorgesehenen Förderrichtung von der Materialaufnahme zu der Materialabgabe und von der Materialabgabe zurück zur Materialaufnahme befördert wird oder beförderbar ist. Die Förderstrecke weist eine Zuführstrecke und eine Rückführstrecke auf, wobei die Zuführstrecke zwischen der Materialaufnahme und der Materialabgabe angeordnet ist und wobei die Rückführstrecke zwischen der Materialabgabe und der Materialaufnahme angeordnet ist, so dass die Förderstrecke einen Kreislauf ausbildet.

Bei derartigen Höhenförderern tritt mitunter das Problem auf, dass am oder auf dem Mitnehmer befindliches Material an dem Mitnehmer anhaftet und somit nicht vollständig oder zumindest nicht zu einem überwiegenden Teil im Bereich der Materialabgabe abgegeben wird oder abgegeben werden kann.

Der Erfindung liegt daher die Aufgabe zugrunde, einen neuen Höhenförderer anzugeben, insbesondere einen Höhenförderer, mit dem die vorgenannten Probleme zumindest weitestgehend vermieden werden.

Diese Aufgabe wird hinsichtlich des Höhenförderers gelöst durch einen Höhenförderer mit den Merkmalen des Anspruchs 1 und hinsichtlich der Vorrichtung zum Trockenen von Material durch eine Vorrichtung mit den Merkmalen des Anspruchs 19. Vorteilhafte Ausgestaltungen und Weiterbildungen sind in den jeweils abhängigen Ansprüchen angegeben.

Die Erfindung ist dadurch gekennzeichnet, dass der Höhenförderer eine Abstreifvorrichtung zum Abstreifen von am oder auf dem Mitnehmer befindlichem Material aufweist.

Die Vorteile der Erfindung liegen insbesondere darin, dass die erfindungsgemäße Abstreifvorrichtung eine höhere Fördermenge von Material vom Lager zur Trocknungsfläche ermöglicht, da der oder jeder Mitnehmer im Bereich der oder vor der Materialabgabe eine höhere Menge an Material abgibt. Auf diese Weise wird der Wirkungsgrad des Höhenförderers deutlich gesteigert. Ferner ist es vorteilhaft, dass die Abstreifvorrichtung rein mechanisch ausgebildet ist und keinen zusätzlichen Antrieb umfasst.

Bevorzugt umfasst die Förderstrecke einen Kettenantrieb, wobei der Kettenantrieb wenigstens zwei parallel verlaufende Ketten und/oder eine Antriebseinheit für die Ketten, insbesondere einen Motor, und/oder ein oder mehrere, vorzugsweise acht, Umlenkelemente, insbesondere Umlenkrollen, zum Umlenken der Ketten aufweist.

Der Mitnehmer ist vorzugsweise in seinen beiden Endbereichen jeweils an einer der Ketten angeordnet, so dass der Mitnehmer von dem Kettenantrieb entlang der vorgesehenen Förderrichtung befördert wird oder beförderbar ist.

Es kann vorgesehen sein, dass die Zuführstrecke und/oder die Rückführstrecke jeweils einen Vertikalabschnitt und einen Horizontalabschnitt aufweisen, wobei der Mitnehmer im Vertikalabschnitt der Zuführstrecke von der Materialaufnahme um eine vorgesehene Strecke vertikal befördert wird, und wobei der Horizontalabschnitt der Zuführstrecke sich an den Vertikalabschnitt anschließt und der Mitnehmer im Horizontalabschnitt der Zuführstrecke um eine vorgesehene Strecke horizontal hin zur Materialabgabe befördert wird, und wobei der Mitnehmer im Vertikalabschnitt und im Horizontalabschnitt der Rückführstrecke von der Materialabgabe zur Materialaufnahme zurückbefördert wird.

Der Höhenförderer weist im Bereich der Materialaufnahme vorzugsweise eine Wanne auf, wobei der Mitnehmer bei seiner Beförderung entlang der Förderstrecke durch die Wanne fährt und dort Material aufnimmt.

Die Förderstrecke, insbesondere die Ketten des Kettenantriebs, wird zwischen einem Vertikalabschnitt und einem Horizontalabschnitt vorzugsweise um 90 Grad gedreht. Ferner kann die Förderstrecke, insbesondere die Ketten des Kettenantriebs, zwischen zwei aufeinanderfolgenden Vertikalabschnitten oder zwei aufeinanderfolgenden Horizontalabschnitten um 180 Grad gedreht werden.

Bevorzugt ist der Mitnehmer schaufelartig ausgebildet, wobei der Mitnehmer eine Bodenfläche und Rückenfläche aufweist, wobei vom Mitnehmer aufgenommenes Material vorzugsweise auf der Bodenfläche aufliegt und/oder an der Rückenfläche anliegt.

Vorzugsweise ist der Mitnehmer mit seiner Bodenfläche an der Förderstrecke angeordnet. Die Bodenfläche ist vorzugweise zwischen 1cm und 5cm tief, besonders bevorzugt 3cm.

Bevorzugt ist vorgesehen, dass die Abstreifvorrichtung mechanisch ausgebildet ist, vorzugsweise rein mechanisch ausgebildet ist und/oder keinen zusätzlichen Antrieb und/oder Motor aufweist. Die Abstreifvorrichtung wird vorzugsweise zumindest indirekt durch den Antrieb des Kettenantriebs betätigt und/oder angetrieben.

Gemäß einer Ausführungsvariante der Erfindung ist die Abstreifvorrichtung zumindest zum wesentlichen Teil in einem Endabschnitt der Zuführstrecke und/oder im Bereich der Materialabgabe oder in einem Bereich vor der Materialabgabe am oder im Höhenförderer angeordnet.

Besonders bevorzugt umfasst die Abstreifvorrichtung einen Träger, wobei der Träger senkrecht zur Förderrichtung und/oder parallel zu einem an der Förderstrecke angeordnetem Mitnehmer angeordnet ist.

Gemäß einer Weiterbildung der Erfindung umfasst die Abstreifvorrichtung einen Kratzbalken, wobei an dem Kratzbalken mehrere Abstreifplättchen mit je einer Abstreiffläche angeordnet sind, wobei die Abstreifflächen senkrecht zur Längsachse des Kratzbalkens angeordnet sind, wobei die Abstreifflächen zum Abstreifen des Mitnehmers, insbesondere der Bodenfläche und/oder der Rückenfläche des Mitnehmers, vorgesehen sind. Bevorzugt ist der Kratzbalken verschiebbar an dem Träger angeordnet, wobei der Kratzbalken parallel zu und/oder entlang der Längsachse des Trägers relativ zum Träger verschiebbar ist. Der Kratzbalken kann hohl ausgebildet sein, wobei der hohle Kratzbalken auf den Träger aufgeschoben ist. Der Kratzbalken ist vorzugsweise kürzer als der Träger.

Es kann vorgesehen sein, dass die Abstreifvorrichtung eine erste Schiebeeinrichtung umfasst, wobei die erste Schiebeeinrichtung zwei Wagen und eine oder mehrere Schienen pro Wagen umfasst, wobei jeder Wagen an einer oder mehrerer der Schienen verfahrbar angeordnet ist, wobei die zwei Wagen-Schienen-Anordnungen an zwei gegenüberliegenden Seiten seitlich neben der Förderstrecke angeordnet sind, wobei die Schienen parallel zur Förderrichtung ausgerichtet sind, und wobei jeder Wagen zwischen einer Ausgangsposition an einem ersten, in Förderrichtung hinten gelegenen Ende der Schiene oder Schienen und einer Endposition an einem zweiten, in Förderrichtung vorne gelegenen Ende der Schiene oder Schienen entlang eines vorgesehenen Fahrtwegs verfahrbar ist.

Bevorzugt ist die erste Schiebevorrichtung zum Schieben des Trägers in Förderrichtung vorgesehen und/oder ausgebildet, wobei der Träger zwischen den beiden Wagen der Abstreifvorrichtung angeordnet und/oder an jedem der Wagen, vorzugsweise drehbar, gelagert ist, wobei der Mitnehmer und die Wagen vertikal derart relativ zueinander im Höhenförderer angeordnet sind, dass der Mitnehmer im Bereich des Fahrtwegs mit den Wagen auf zumindest annähernd selber Höhe liegt, so dass der Mitnehmer indirekt an den Träger anstößt, indem der Mitnehmer im Bereich des Fahrtwegs an zwei Anschläge anstößt, die jeweils an jedem der beiden Wagen angeordnet sind, wobei durch die Bewegung des Mitnehmers in Förderrichtung eine Linearbewegung des Trägers entlang des vorgesehenen Fahrtwegs erzeugt wird, indem die Wagen durch den Mitnehmer von der Ausgangsposition hin zur Endposition geschoben werden.

Insbesondere stößt der Mitnehmer während des Abfahrens der Förderstrecke im Bereich des Fahrtwegs gegen die Anschläge an den beiden Wagen und schiebt dann die Wagen und damit auch den Träger, der ebenfalls an den Wagen angeordnet ist in Förderrichtung. Auf diese Weise wird die Linearbewegung des Trägers erzeugt.

Gemäß einer Ausführungsvariante der Erfindung umfasst die Abstreifvorrichtung eine zweite Schiebeeinrichtung, wobei mittels der zweiten Schiebeeinrichtung eine Linearbewegung des Kratzbalkens senkrecht zur Förderrichtung erzeugt wird, so dass die Abstreifflächen der Abstreifplättchen zur Erzeugung einer Abstreifbewegung an dem Mitnehmer, insbesondere der Bodenfläche und/oder Rückenfläche des Mitnehmers, entlang bewegt werden oder bewegbar sind.

Vorzugsweise umfasst die zweite Schiebeeinrichtung eine Kulissenführung oder ist durch eine Kulissenführung ausgebildet, wobei die Kulissenführung, insbesondere einseitig, seitlich neben der Förderstrecke am oder im Höhenförderer angeordnet. Vorzugsweise ist die Kulissenführung im Bereich der ersten Schiebeeinrichtung, insbesondere in einem Bereich der Schienen der ersten Schiebeeinrichtung, angeordnet.

Es kann vorgesehen sein, dass der Kratzbalken, insbesondere an einer Unterseite einer seitlichen Verlängerung, eine Rolle und die Kulissenführung einen Führungskanal zur Führung der Rolle aufweist, wobei die Rolle in dem Führungskanal angeordnet oder anordenbar ist, und wobei der Führungskanal in wenigstens einem ersten Abschnitt parallel zur Förderrichtung verläuft und in wenigstens einem zweiten Abschnitt um einen vorgesehenen Winkel, insbesondere um 10 Grad bis 50 Grad, besonders bevorzugt um 25 Grad, geneigt zur Förderrichtung und von der Förderstrecke wegorientiert verläuft, wobei die Rolle durch eine Bewegung des Kratzbalkens in Förderrichtung durch den Führungskanal bewegt wird oder bewegbar ist, wobei die Rolle bei dieser Bewegung im zweiten Abschnitt des Führungskanals den Kratzbalken seitlich mitzieht, so dass eine Linearbewegung des Kratzbalkens senkrecht zur Förderrichtung erzeugt wird. Diese Linearbewegung des Kratzbalkens erzeugt bevorzugt die Abstreifbewegung der Abstreifplättchen des Kratzbalkens.

Ferner kann vorgesehen sein, dass der Führungskanal einen dritten Abschnitt aufweist, der parallel zur Förderrichtung verläuft. In Förderrichtung folgen vorzugsweise der dritte Abschnitt auf den zweiten Abschnitt und der zweite Abschnitt auf den ersten Abschnitt.

Gemäß einer weiteren Ausführungsvariante der Erfindung umfasst die Abstreifvorrichtung wenigstens eine, vorzugweise zwei, Kippeinrichtungen, wobei die Kippeinrichtung oder Kippeinrichtungen eine Schwenkbewegung des Trägers nach oben erzeugen, wobei der Träger, und insbesondere die Abstreifplättchen des Kratzbalkens, durch die Schwenkbewegung über den Mitnehmer hinweg geschwenkt werden, wobei die Kippeinrichtung oder Kippeinrichtungen vorzugsweise seitlich neben der Förderstrecke vorgesehen sind. Vorzugsweise sind zwei Kippeinrichtungen vorgesehen, wobei je eine Kippeinrichtung jeweils seitlich neben der Förderstrecke angeordnet ist und/oder sich die beiden Kippeinrichtungen senkrecht zur Förderrichtung gegenüberliegen.

Es kann vorgesehen sein, dass die oder jede Kippeinrichtung wenigstens eine Konturplatte und einen korrespondierenden Hebel umfasst, wobei der Hebel an einem ersten Ende an dem Träger angeordnet ist, wobei der Träger drehbar gelagert ist, und wobei der Hebel an einem dem ersten Ende gegenüberliegenden zweiten Ende eine Rolle aufweist, wobei die Rolle zum Abfahren der Konturplatte vorgesehen ist, wobei die Konturplatte in Förderrichtung betrachtet eine Schräge nach unten aufweist, wobei der Hebel beim Abfahren der Schräge der Konturplatte mit der Rolle an dem zweiten Ende nach unten gedrückt wird oder drückbar ist, so dass der Träger nach oben geschwenkt wird.

Der Hebel kann einen Doppelarm mit zwei parallelen Stangen und einem Verbindungsstück zwischen den beiden Stangen aufweisen. Die Rolle kann einer der beiden Stangen des Doppelarms angeordnet sein.

Gemäß einer vorteilhaften Weiterbildung der Erfindung umfasst die Abstreifvorrichtung wenigstens eine Rückstelleinrichtung, wobei mittels der Rückstelleinrichtung die Wagen der ersten Schiebeeinrichtung aus ihrer Endposition in ihre Ausgangsposition zurückgeführt werden oder rückführbar sind.

Es kann vorgesehen sein, dass die Rückstelleinrichtung wenigstens ein freihängendes Gewicht, vorzugsweise mehrere Gewichtsscheiben, und wenigstens ein Zugmittel, insbesondere ein Stahlseil, umfasst, wobei das wenigstens eine freihängende Gewicht mittels des Zugmittels mit einem Wagen der ersten Schiebevorrichtung verbunden ist, wobei das freihängende Gewicht den Wagen entgegen des Fahrtwegs in seine Ausgangsposition zurückzieht, insbesondere wenn der Wagen nicht über den Träger durch einen Mitnehmer in Förderrichtung geschoben wird.

Vorzugsweise ist je Wagen-Schienen-Anordnung der ersten Schiebeeinrichtung je eine Rückstelleinrichtung vorgesehen, wobei je ein freihängendes Gewicht pro Wagen vorgesehen, wobei jedes der Gewichte mittels eines Zugmittels mit je einem Wagen verbunden ist. Es kann vorgesehen sein, dass das freihängende Gewicht über eine oder mehrere Umlenkrollen mit dem Wagen verbunden ist. Das freihängende Gewicht kann in einer Gewichtsführung angeordnet sein.

Die erfindungsgemäße Vorrichtung zum Trocken zum Trocknen von Material, insbesondere Biomasse, beispielsweise Klärschlamm, umfasst ein Lager für das Material und eine Trocknungsfläche für das Material. Die erfindungsgemäße Vorrichtung ist dadurch gekennzeichnet, dass die Vorrichtung einen erfindungsgemäßen Höhenförderer umfasst.

Die Erfindung wird nachstehend auch hinsichtlich weiterer Merkmale und Vorteile anhand der Beschreibung von Ausführungsbeispielen und unter Bezugnahme auf die beiliegenden, schematischen Zeichnungen näher erläutert. Es zeigen
- FIG 1: ein Ausführungsbeispiel eines erfindungsgemäßen Höhenförderers in einer seitlichen Schnittdarstellung;
- FIG 2: den Höhenförderer nach FIG. 1 in einer dreidimensionalen Darstellung;
- FIG 3: eine Abstreifvorrichtung eines Ausführungsbeispiels eines erfindungsgemäßen Höhenförderers in einer Draufsicht;
- FIG 4: einen Ausschnitt einer Abstreifvorrichtung eines Ausführungsbeispiels eines erfindungsgemäßen Höhenförderers in einer Draufsicht;
- FIG 5: einen Ausschnitt einer Abstreifvorrichtung eines Ausführungsbeispiels eines erfindungsgemäßen Höhenförderers in einer Seitenansicht in einem ersten Zustand;
- FIG 6: den Ausschnitt der Abstreifvorrichtung nach FIG. 5 in einem zweiten Zustand;
- FIG 7a: eine Abstreifvorrichtung eines Ausführungsbeispiels eines erfindungsgemäßen Höhenförderers in einer dreidimensionalen Darstellung in einem ersten Zustand;
- FIG 7b: die Abstreifvorrichtung nach FIG. 7a in einer Draufsicht;
- FIG 8a: eine Abstreifvorrichtung eines Ausführungsbeispiels eines erfindungsgemäßen Höhenförderers in einer dreidimensionalen Darstellung in einem zweiten Zustand;
- FIG 8b: die Abstreifvorrichtung nach FIG. 8a in einer Draufsicht;
- FIG 9a: eine Abstreifvorrichtung eines Ausführungsbeispiels eines erfindungsgemäßen Höhenförderers in einer dreidimensionalen Darstellung in einem dritten Zustand;
- FIG 9b: die Abstreifvorrichtung nach FIG. 9a in einer Draufsicht;
- FIG 10a: eine Abstreifvorrichtung eines Ausführungsbeispiels eines erfindungsgemäßen Höhenförderers in einer dreidimensionalen Darstellung in einem vierten Zustand;
- FIG 10b: die Abstreifvorrichtung nach FIG. 10a in einer Draufsicht;
- FIG 11a: eine Abstreifvorrichtung eines Ausführungsbeispiels eines erfindungsgemäßen Höhenförderers in einer dreidimensionalen Darstellung in einem fünften Zustand;
- FIG 11b: die Abstreifvorrichtung nach FIG. 11a in einer Draufsicht.

Einander entsprechende Teile und Komponenten sind in allen Figuren, auch über die verschiedenen Ausführungsbeispiele hinweg, mit den gleichen Bezugszeichen versehen.

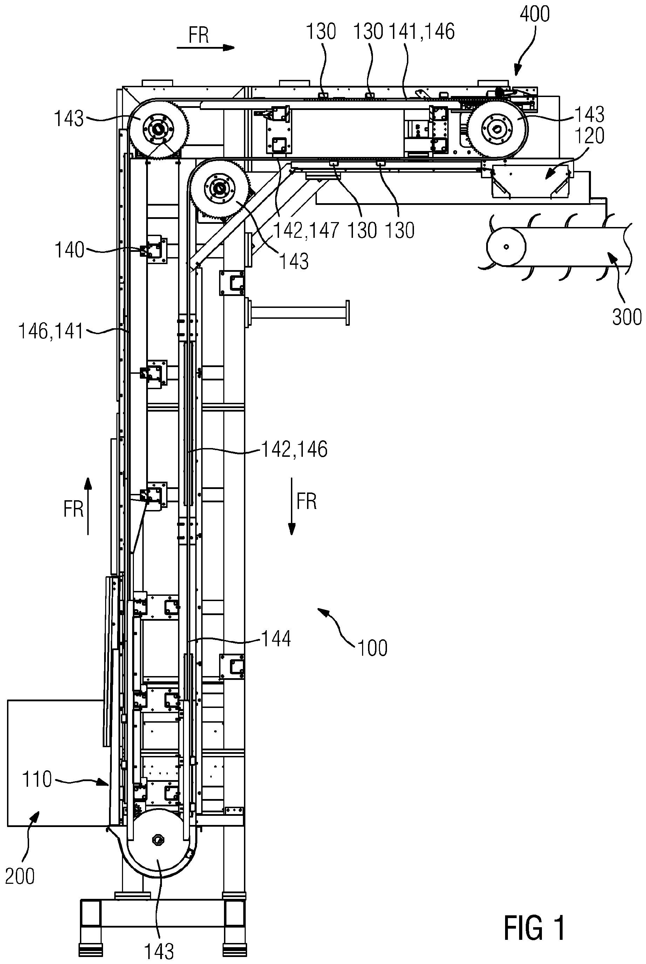

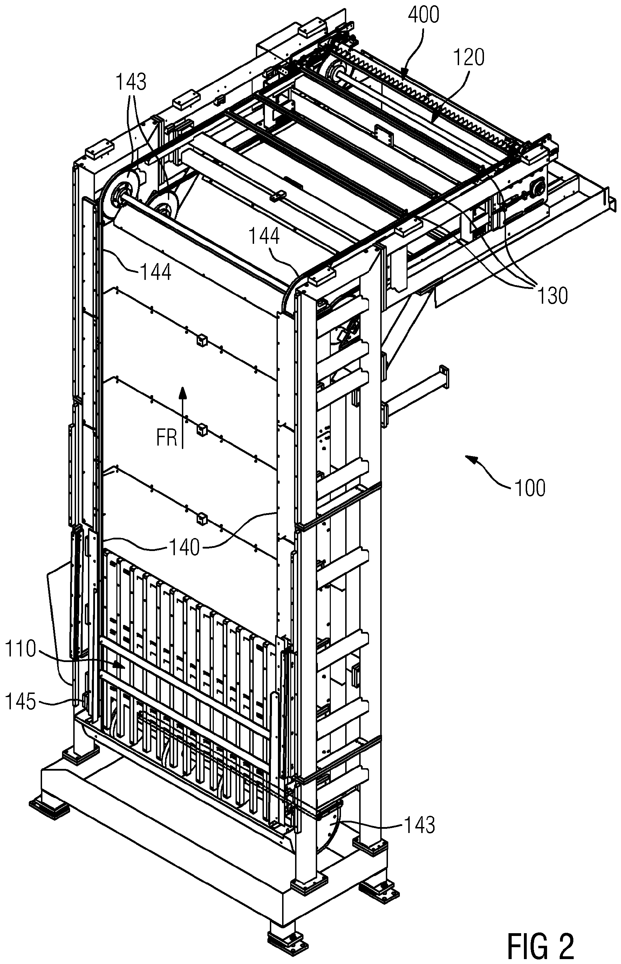

FIG. 1 und FIG. 2 zeigen einen erfindungsgemäßen Höhenförderer 100 für eine Vorrichtung zum Trocknen von Material, insbesondere Biomasse, beispielsweise Klärschlamm. Der Höhenförderer 100 ist zum Befördern des Materials von einem in FIG. 1 schematisch dargestellten, in vertikaler Erstreckung unten am Höhenförderer 100 angeordneten Lager 200 der Vorrichtung zu einer ebenfalls in FIG. 1 schematisch dargestellten, in vertikaler Erstreckung oben am Höhenförderer angeordneten Trocknungsfläche 300 der Vorrichtung vorgesehen und ausgebildet.

Der Höhenförderer 100 weist eine Materialaufnahme 110 in einem in vertikaler Erstreckung unteren Bereich und eine Materialabgabe 120 in einem in vertikaler Erstreckung oberen Bereich auf. Die Materialaufnahme 110 ist im vorliegenden Ausführungsbeispiel durch eine Öffnung im Höhenförderer 100 ausgebildet, welche sich an das Lager 200 anschließt. Über diese Öffnung wird Material aus dem Lager 200 in den Höhenförderer 200 befördert, beispielsweise fällt oder fließt das Material aus dem Lager 200 in den Höhenförderer 100. Unten im Höhenförderer 100 ist zur Aufnahme des Materials eine nicht in den Figuren dargestellte Wanne angeordnet.

Der Höheförderer 100 weist mehrere Mitnehmer 130 zur Mitnahme von Material und eine Förderstrecke 140 für die Mitnehmer 130 auf. Die Mitnehmer 130 sind an der Förderstrecke 14 angeordnet und werden mittels der Förderstrecke 140 in einer vorgesehenen Förderrichtung FR von der Materialaufnahme 110 zu der Materialabgabe 120 und von der Materialabgabe 120 zurück zur Materialaufnahme 110 befördert. Die Mitnehmer 130 sind in vorgesehenen Abständen hintereinander an der Förderstecke 140 angeordnet.

Die Materialabgabe 120 ist im vorliegenden Ausführungsbeispiel durch eine Öffnung im Höhenförderer 100 ausgebildet, durch die das Material aus dem Höhenförderer 100 auf die Trocknungsfläche 300 fällt oder fließt, insbesondere wenn der Mitnehmer 130 in diesem Bereich durch die Förderstrecke 140 gedreht wird.

Die Förderstrecke 140 weist eine Zuführstrecke 141 und eine Rückführstrecke 142 auf, wobei die Zuführstrecke 141 zwischen der Materialaufnahme 110 und der Materialabgabe 120 angeordnet ist und wobei die Rückführstrecke 142 zwischen der Materialabgabe 120 und der Materialaufnahme 110 angeordnet ist, so dass die Förderstrecke 140 einen Kreislauf ausbildet. Die Mitnehmer 130 fahren in einem aktiven Betriebszustand des Höhenförderers 100, in dem die Ketten 144 durch die Antriebseinheit 145 angetrieben werden, den Kreislauf kontinuierlich in Förderrichtung FR ab.

Die Zuführstrecke 141 und die Rückführstrecke 142 weisen jeweils einen Vertikalabschnitt 146 und einen Horizontalabschnitt 147 auf, wobei ein Mitnehmer 130 im Vertikalabschnitt 146 der Zuführstrecke 141 von der Materialaufnahme 110 um eine vorgesehene Strecke vertikal nach oben befördert wird, und wobei der Horizontalabschnitt 147 der Zuführstrecke 141 sich an den Vertikalabschnitt 146 anschließt und ein Mitnehmer 130 im Horizontalabschnitt 147 der Zuführstrecke 141 um eine vorgesehene Strecke horizontal hin zur Materialabgabe 120 befördert wird. Der Mitnehmer 130 wird gemäß dem vorliegenden Ausführungsbeispiel zunächst im Horizontalabschnitt 147 der Rückführstrecke 142 und anschließend im Vertikalabschnitt 146 der Rückführstrecke 142 von der Materialabgabe 120 zur Materialaufnahme 110 zurückbefördert. Anschließend fährt der Mitnehmer 130 die Strecke vorzugsweise erneut ab.

Die Förderstrecke 140 umfasst einen Kettenantrieb, wobei der Kettenantrieb zwei parallel verlaufende Ketten 144 und eine Antriebseinheit 145, insbesondere einen Motor zum Antrieb für die Ketten 144, aufweist. Ferner weist der Kettenantrieb acht als Umlenkrollen ausgebildete Umlenkelemente 143 zum Umlenken der Ketten 144 auf. Dabei sind jeweils vier Umlenkelemente 143 pro Kette 144 vorgesehen, wie FIG. 1 zeigt. Jedes Umlenkelement 143 lenkt eine Kette 144 aus einem Vertikalabschnitt 146 in einen Horizontalabschnitt 147 oder aus einem Horizontalabschnitt 147 in einen Vertikalabschnitt 146 um. Die Ketten 144 können durch die Umlenkelemente 143 um 90 Grad oder um 180 Grad umgelenkt werden.

Die Mitnehmer 130 sind schaufelartig ausgebildet, wobei jeder Mitnehmer 130 eine Bodenfläche 131 und Rückenfläche 132 aufweist, wobei vom Mitnehmer 130 aufgenommenes Material auf der Bodenfläche 131 aufliegt und an der Rückenfläche 132 anliegt. Die Mitnehmer 130 sind mit ihrer Bodenfläche 131 an der Förderstrecke 140 angeordnet.

Die Mitnehmer 130 sind jeweils an ihren beiden, in Längsrichtung gelegenen Endbereichen an einer der Ketten 144 angeordnet, so dass die Mitnehmer 130 von dem Kettenantrieb entlang der vorgesehenen Förderrichtung FR befördert werden. Während des aktiven Betriebszustands des Höhenförderers durchfahren die Mitnehmer 130 die im Bereich der Materialaufnahme 110 angeordnete Wanne, in welcher sich das Material befindet und nehmen dort Material auf. Im Bereich der Materialabgabe werden die Mitnehmer durch die um 180 Grad umgelenkten Ketten 144 gedreht und Material fällt oder fließt von den Mitnehmern 130 durch die als Öffnung ausgebildete Materialausgabe 120 auf die Trocknungsfläche 300.

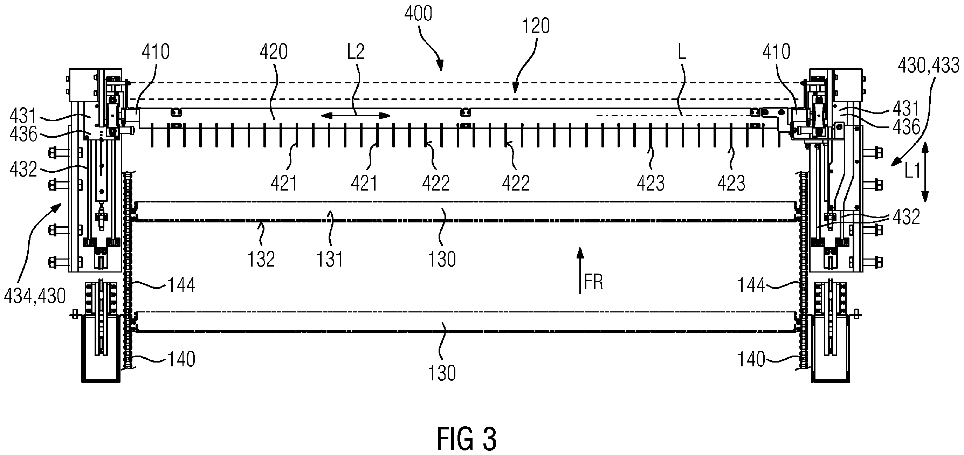

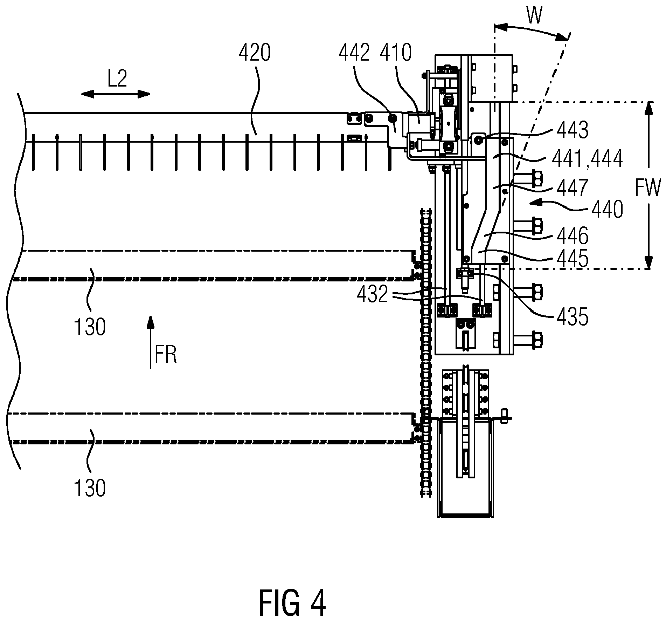

Erfindungsgemäß ist vorgesehen, dass der Höhenförderer 100 eine Abstreifvorrichtung 400 zum Abstreifen von am oder auf dem Mitnehmer 130 befindlichem Material aufweist. Die Abstreifvorrichtung 400 ist rein mechanisch ausgebildet und benötigt keinen zusätzlichen Antrieb oder Motor. Die Abstreifvorrichtung 400 wird zumindest indirekt ausschließlich durch den Antrieb 145 des Kettenantriebs betätigt. Die erfindungsgemäße Abstreifvorrichtung 400 wird nachfolgend unter Bezugnahme auf FIG. 3 bis FIG. 11b erläutert.

Die Abstreifvorrichtung 400 ist wie FIG. 2 zeigt zumindest zum wesentlichen Teil in einem Endabschnitt der Zuführstrecke 141 in einem Bereich vor der Materialabgabe 120 im Höhenförderer 100 angeordnet. Zumindest wird die Abstreifbewegung, welche mittels der Abstreifvorrichtung 400 ausgeführt wird, um am oder auf einem Mitnehmer 130 befindliches Material abzustreifen im Endabschnitt der Zuführstrecke vor der Materialabgabe 120 durchgeführt.

FIG. 3 zeigt, dass die Abstreifvorrichtung 400 einen Träger 410 umfasst, wobei der Träger 410 senkrecht zur Förderrichtung FR und parallel zu den an der Förderstrecke 140 angeordneten Mitnehmern 130 angeordnet ist.

Die Abstreifvorrichtung 400 umfasst ferner einen Kratzbalken 420, wobei an dem Kratzbalken 420 mehrere Abstreifplättchen 421 mit je einer Abstreiffläche 422 angeordnet sind, wobei die Abstreifflächen 422 senkrecht zur Längsachse L des Kratzbalkens 420 angeordnet sind, wobei die Abstreifflächen 422 zum Abstreifen der Bodenfläche 131 des Mitnehmers 130 vorgesehen sind. Der Kratzbalken 420 ist verschiebbar an dem Träger 410 angeordnet, wobei der Kratzbalken 420 entlang der Längsachse L des Trägers 410 relativ zum Träger 410 verschiebbar ist. Der Kratzbalken 420 ist hierzu hohl ausgebildet, wobei der hohle Kratzbalken 420 auf den Träger 410 aufgeschoben ist. Ferner ist der Kratzbalken 420 kürzer als der Träger 410 ausgebildet, so dass ein Bewegungsweg des Kratzbalkens 420 am Träger 410 ermöglicht wird.

Die Abstreifvorrichtung 400 umfasst eine erste Schiebeeinrichtung 430, wobei die erste Schiebevorrichtung 430 zum Schieben des Trägers 410 in Förderrichtung FR vorgesehen und ausgebildet ist und damit eine Linearbewegung L1 des Trägers 410 erzeugt. Die erste Schiebeeinrichtung 430 umfasst hierzu zwei Wagen 431 und drei Schienen 432 pro Wagen 431, wobei jeder Wagen 431 an den korrespondierenden drei Schienen 432 verfahrbar angeordnet ist, wobei die zwei Wagen-Schienen-Anordnungen 433, 434 an zwei gegenüberliegenden Seiten seitlich neben der Förderstrecke 140 angeordnet sind. Die Schienen 432 sind parallel zur Förderrichtung FR ausgerichtet, wobei jeder Wagen 431 zwischen einer Ausgangsposition 435 an einem ersten, in Förderrichtung FR hinten gelegenen Ende der Schienen 432 und einer Endposition 436 an einem zweiten, in Förderrichtung FR vorne gelegenen Ende der Schienen 432 entlang eines vorgesehenen Fahrtwegs FW verfahrbar ist. Der Träger 410 ist zwischen den beiden Wagen 431 der Abstreifvorrichtung 400 angeordnet und an jedem der Wagen 431 gelagert. Die Mitnehmer 130 und die Wagen 431 sind vertikal derart relativ zueinander im Höhenförderer 100 angeordnet, dass jeder Mitnehmer 130 im Bereich des Fahrtwegs FW mit den Wagen 431 auf annähernd selber Höhe liegt, so dass der Mitnehmer 130 indirekt an den Träger 410 anstößt, indem der Mitnehmer 130 an zwei Anschläge 437 anstößt, die jeweils an jedem der beiden Wagen 431 angeordnet sind. Durch die Bewegung des Mitnehmers 130 in Förderrichtung FR wird dann eine Bewegung der Wagen 431 entlang des vorgesehenen Fahrtwegs FW von der Ausgangsposition 435 hin zur Endposition 436 und damit eine Linearbewegung L1 des Trägers 410 in Förderrichtung FR erzeugt. In andere Worten: Wenn ein Mitnehmer 130 während des Abfahrens der Förderstrecke 140 im Bereich der Fahrtwegs FW gegen die Anschläge 437 an den Wagen 431 stößt, schiebt der Mitnehmer 130 dann die beiden Wagen 431 und damit auch den Träger 410, der ebenfalls an dem Wagen 431 angeordnet ist, in Förderrichtung FR. Auf diese Weise wird die Linearbewegung L1 des Trägers 410 erzeugt.

Die Abstreifvorrichtung 400 umfasst zudem eine zweite Schiebeeinrichtung 440, wobei mittels der zweiten Schiebeeinrichtung 440 eine Linearbewegung L2 des Kratzbalkens 420 senkrecht zur Förderrichtung FR erzeugt wird, so dass die Abstreifflächen 422 der Abstreifplättchen 421 zur Erzeugung einer Abstreifbewegung an dem Mitnehmer 130 entlang bewegt werden. Die zweite Schiebeeinrichtung 440 umfasst eine Kulissenführung 441. Die Kulissenführung 441 ist im Bereich der Schienen 432 einer Wagen-Schienen-Anordnung 434 der ersten Schiebeeinrichtung 430 einseitig seitlich neben der Förderstrecke 140 im Höhenförderer 100 angeordnet. Der Kratzbalken 420 weist eine seitliche Verlängerung 442 und eine an einer Unterseite der seitlichen Verlängerung 442 angeordnete Rolle 443 auf. Die Kulissenführung 441 weist einen Führungskanal 444 zur Führung der Rolle 443 auf, wobei die Rolle 443 in dem Führungskanal 444 anordenbar ist. Der Führungskanal 444 verläuft in einem ersten Abschnitt 445 parallel zur Förderrichtung FR und in einem zweiten Abschnitt um einen vorgesehenen Winkel W von 25 Grad geneigt zur Förderrichtung FR und von der Förderstrecke 140 wegorientiert. Ferner weist der Führungskanal 444 einen dritten Abschnitt 447 auf, der wieder parallel zur Förderrichtung FR verläuft. In Förderrichtung FR folgen der dritte Abschnitt 447 auf den zweiten Abschnitt 446 und der zweite Abschnitt 446 auf den ersten Abschnitt 445. Die Rolle 443 ist durch eine Bewegung des Kratzbalkens 420 in Förderrichtung FR durch den Führungskanal 444 bewegbar, wobei die Rolle 443 bei dieser Bewegung im zweiten Abschnitt 446 des Führungskanals 444 den Kratzbalken 420 seitlich mitzieht, so dass eine Linearbewegung L2 des Kratzbalkens 420 senkrecht zur Förderrichtung FR erzeugt wird. Diese Linearbewegung L2 des Kratzbalkens 420 erzeugt die Abstreifbewegung.

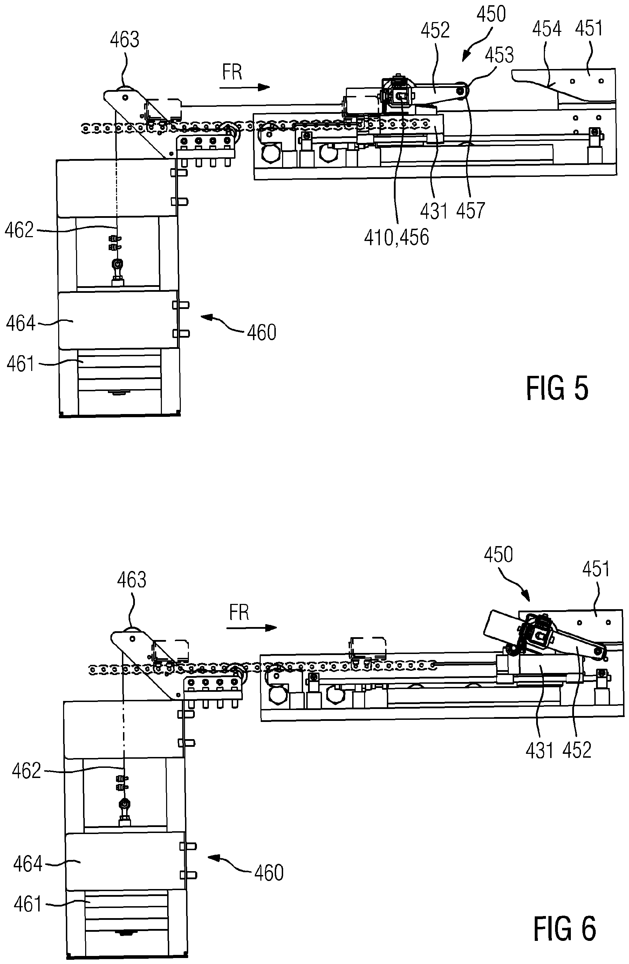

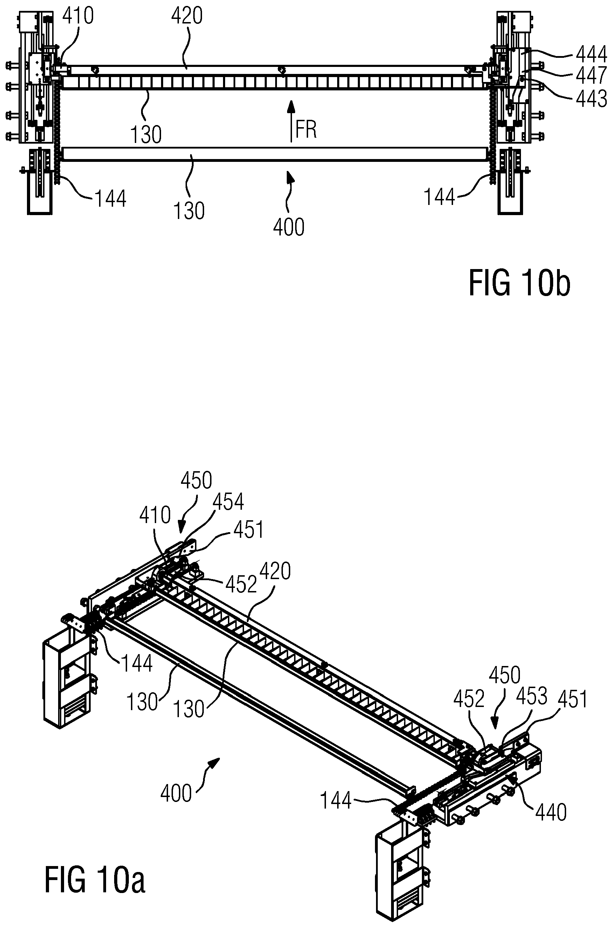

Die Abstreifvorrichtung 400 umfasst zwei Kippeinrichtungen 450, wobei eine der Kippeinrichtungen in FIG. 5 und FIG. 6 dargestellt ist. Die beiden Kippeinrichtungen 450 sind, wie beispielsweise FIG. 10a zeigt, jeweils seitlich neben der Förderstrecke 140 angeordnet ist und liegen sich senkrecht zur Förderrichtung FR gegenüber. Die Kippeinrichtungen 450 erzeugen eine Schwenkbewegung SB des Trägers 410 nach oben, wobei durch die Schwenkbewegung SB der Träger 410 und damit die Abstreifplättchen 421 des Kratzbalkens 420 über den Mitnehmer 130 hinweg geschwenkt werden. Jede Kippeinrichtung 450 umfasst eine Konturplatte 451 und einen korrespondierenden Hebel 452, wobei der Hebel 452 an einem ersten Ende 456 an dem Träger 410 angeordnet ist, wobei der Träger 410 drehbar gelagert ist, und wobei der Hebel 452 an einem dem ersten Ende 456 gegenüberliegenden zweiten Ende 457 eine Rolle 453 aufweist, wobei die Rolle 453 zum Abfahren der Konturplatte 451 vorgesehen ist, wobei die Konturplatte 451 in Förderrichtung betrachtet eine Schräge 454 nach unten aufweist, wobei der Hebel 452 beim Abfahren der Schräge 454 der Konturplatte 451 mit der Rolle 453 an dem zweiten Ende 457 nach unten gedrückt wird, so dass der Träger 410 nach oben geschwenkt wird. Der Hebel 452 ist gemäß den vorliegenden Ausführungsbeispielen jeweils als Doppelarm mit zwei parallelen Stangen und einem Verbindungsstück zwischen den beiden Stangen ausgebildet. Die Rolle 453 ist an einer der beiden Stangen des Doppelarms angeordnet.

Die Abstreifvorrichtung 400 umfasst zudem zwei Rückstelleinrichtungen 460, wobei mittels jeder Rückstelleinrichtung 460 zumindest einer der Wagen 431 der ersten Schiebeeinrichtung 430 aus seiner Endposition 436 in seine Ausgangsposition 435 zurückgeführt wird oder rückführbar sind. Jede Rückstelleinrichtung 460 umfasst mehrere, freihängende Gewichte 461, und ein als Stahlseil ausgebildetes Zugmittel 462, wobei die freihängenden Gewichte 461 jeweils mittels des Zugmittels 462 mit einem der Wagen 431 der ersten Schiebevorrichtung 430 verbunden sind. Die freihängenden Gewichte 461 ziehen den jeweiligen Wagen 431 entgegen des Fahrtwegs FW in seine Ausgangsposition 435 zurück, wenn die Wagen 431 nicht durch einen Mitnehmer 130 in Förderrichtung FR geschoben werden. Die freihängenden Gewichte 461 sind über eine oder mehrere Umlenkrollen 463 mit dem Wagen 431 verbunden und jeweils in einer Gewichtsführung 463 angeordnet.

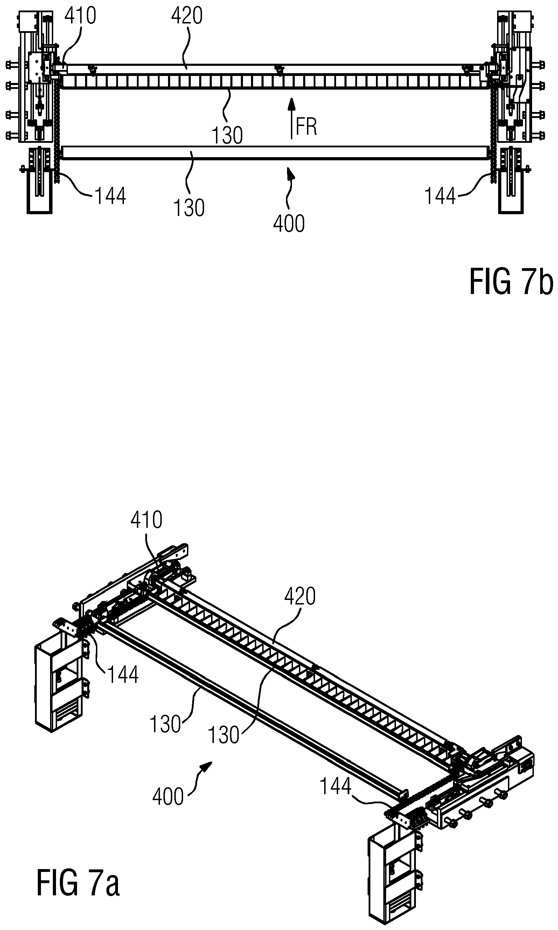

Nachfolgend soll anhand der Figuren 7a bis 11b der Ablauf des Förderprozesses mit dem erfindungsgemäßen Höhenförderer 100 und das Abstreifen der Mitnehmer 130 mit der Abstreifvorrichtung 400 erläutert werden. Jedes Figurenpaar der Figuren 7 bis 11 zeigt dabei jeweils die Abstreifvorrichtung 400 des Höhenförderers 100 in einem anderen Zustand während des Förderprozesses.

FIG. 7a und FIG. 7b zeigen die Abstreifvorrichtung 400 zum Abstreifen von am oder auf dem Mitnehmer 130 befindlichem Material. Ferner sind exemplarisch zwei Mitnehmer 130 dargestellt, die an zwei Ketten 144 des Kettenantriebs der Förderstrecke 140 angeordnet sind und mittels der Förderstrecke 140 bzw. der Antriebseinheit des Kettenantriebs 145 in Förderrichtung FR befördert werden. Bei den nachfolgenden Ausführungen wird jeweils auf den in Förderrichtung FR zuvorderst liegenden Mitnehmer 130 Bezug genommen. FIG. 7a und FIG. 7b zeigen zudem den Träger 410 und den am Träger 410 angeordneten Kratzbalken 420 der Abstreifvorrichtung 400.

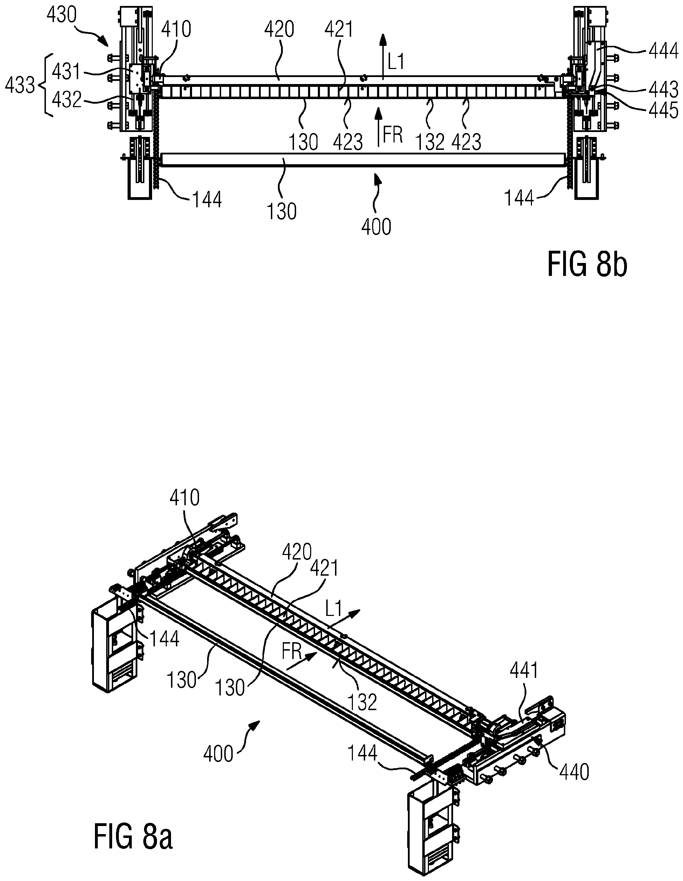

FIG. 8a und FIG. 8b zeigen einen Zustand der Abstreifvorrichtung 400, in welchem der Mitnehmer 130 an die Abstreifvorrichtung 400 herangefahren ist. Der Mitnehmer 130 stößt nun an die beiden Anschläge 437 an. Die Anschläge 437 sind an den beiden Wagen 431 der ersten Schiebeeinrichtung 430 angeordnet. Die beiden Wagen 431 sind jeweils an den Schienen 432 verschiebbar. Gemäß dem Zustand der Abstreifvorrichtung 400 in FIG. 8a und FIG. 8b sind die Wagen 431 in einer Ausgangsposition, d.h. die Wagen stehen in Förderrichtung FR gesehen noch hinten an den Schienen. Der Träger 410 ist an beiden Wagen 431 angeordnet. Die Rolle 443 der zweiten Schiebeeinrichtung 440 ist im Führungskanal 444 der Kulissenführung angeordnet und zwar in einem ersten Abschnitt 445 des Führungskanals, der parallel zur Förderrichtung FR ausgerichtet ist. Wenn der Mitnehmer 130 nun weiter in Förderrichtung FR bewegt wird, schiebt der Mitnehmer 130, der an die Anschläge 437 angestoßen ist, die Wagen 431 entlang des vorgesehenen Fahrtwegs FW die Schienen 432 entlang. Auf diese Weise wird der an den Wagen 431 angeordnete Träger 410 in Förderrichtung FR geschoben, so dass eine Linearbewegung L1 des Trägers 410 in Förderrichtung FR erzeugt wird.

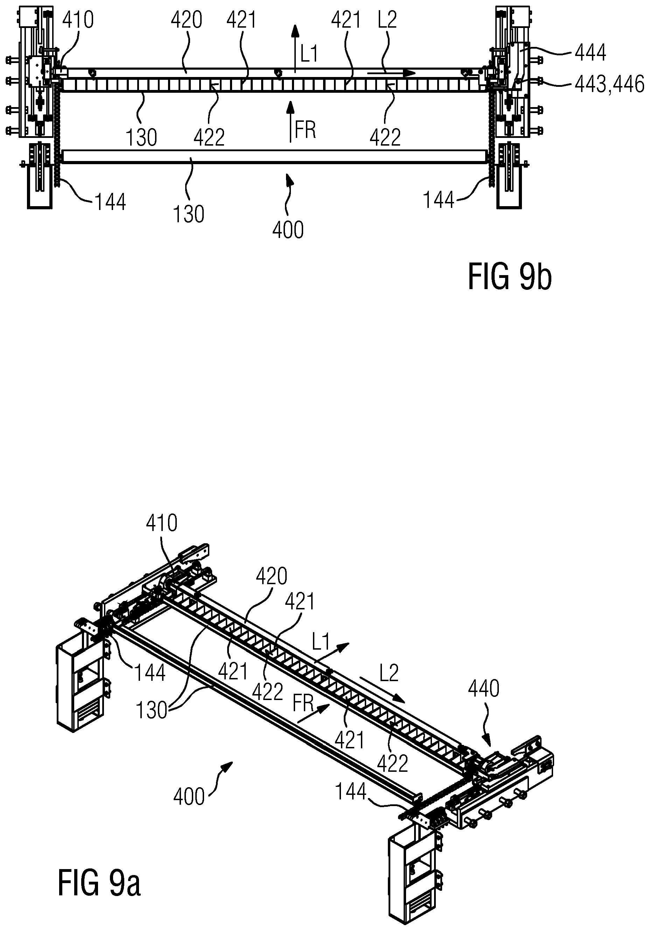

FIG. 9a und FIG. 9b zeigen einen Zustand der Abstreifvorrichtung 400, in welchem die Rolle 443 an der Verlängerung des Kratzbalkens 420 durch die Linearbewegung L1 des Trägers 410 in den zweiten Abschnitt 446 im Führungskanal 444 der Kulissenführung geschoben wurde. Der zweite Abschnitt 446 ist von der Förderstrecke 140 weggeneigt, insbesondere um einen Winkel von 25 Grad. Da die Rolle 443 über eine Verlängerung am Kratzbalken 420 befestigt ist, zieht die Rolle 443 während ihrer Bewegung im zweiten Abschnitt 446 den Kratzbalken 420 seitlich mit, wobei der Kratzbalken 420 am Träger 410 verschoben wird. Auf diese Weise wird eine Linearbewegung L2 des Kratzbalkens 420 senkrecht zur Förderrichtung FR in Richtung hin zur zweiten Schiebeeinrichtung 440 erzeugt. Diese Linearbewegung L2 erzeugt die eigentliche Abstreifbewegung der Abstreifvorrichtung 400, wobei die Abstreifplättchen 421 mit ihrer Abstreiffläche 422 den Mitnehmer 130, insbesondere die Bodenfläche 131 des Mitnehmers 130 abstreifen. Auf diese Weise wird Material, welches sich auf oder am Mitnehmer 130 befindet aufgelockert oder es wird einem Anhaften des Materials am Mitnehmer 130 entgegengewirkt. Dies bringt den Vorteil mit sich, dass das Material nach dem Abstreifen besser vom Mitnehmer 130 fallen oder fließen kann, wenn dieser im Bereich der Materialabgabe 120 um 180 Grad gedreht wird.

FIG. 10a und FIG. 10b zeigen einen Zustand der Abstreifvorrichtung 400, in welchem die Rolle 443 der zweiten Schiebeeinrichtung 440 durch die Linearbewegung L1 des Trägers 410 den dritten Abschnitt 447 im Führungskanal 444 der Kulissenführung erreicht hat. Der dritte Abschnitt 447 verläuft wieder parallel zur Förderrichtung FR. Die Abstreifbewegung ist somit abgeschlossen. Im Zustand nach FIG. 10a und FIG. 10b tritt nun die Rolle 453 der Kippeinrichtung 450, welche jeweils über einen der Hebel 452 am Träger 410 angeordnet ist, in Kontakt mit einer korrespondierenden Konturplatte 451.

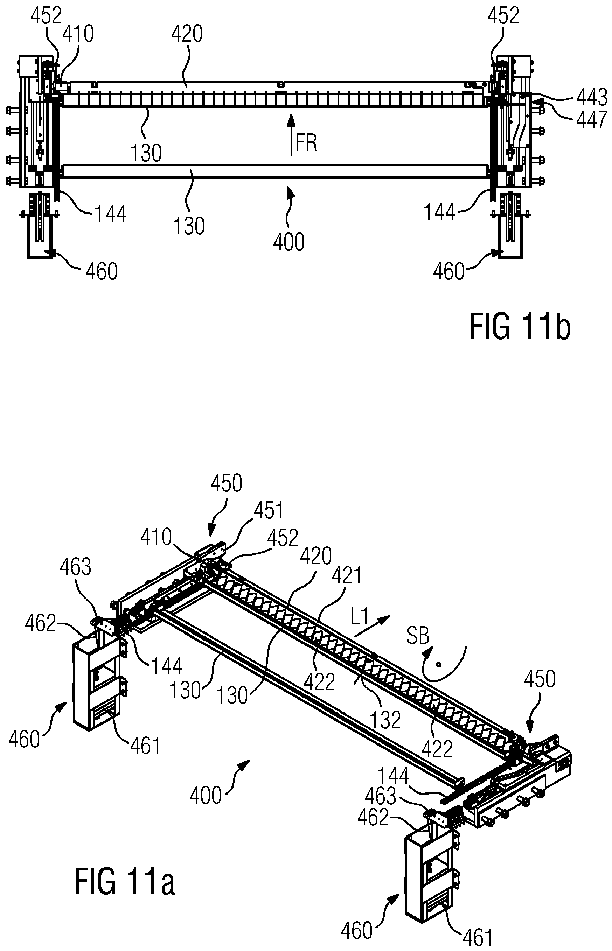

Die Konturplatte 451 weist eine Schräge 454 nach unten auf. Wenn nun die Rolle 453 die Schräge 454 wie in dem Zustand der Abstreifvorrichtung 400 nach FIG. 11a und FIG. 11b nach unten abfährt, wird der Hebel 452, an dessen ersten Ende 456 die Rolle 453 angeordnet ist, nach unten gedrückt. Der Hebel 452 ist an seinem zweiten Ende 457 an dem Träger 451 befestigt, so dass das Nach-Unten-Drücken des Hebels 452 eine Schwenkbewegung SB des Trägers 410 erzeugt. Der Träger 410 wird nun derart geschwenkt, dass die Abstreifplättchen 422 über den Mitnehmer 410 hinweggehoben werden. Genau dieser Punkt in der Schwenkbewegung SB und der Linearbewegung L1 des Trägers 410 entspricht dem Zustand nach FIG. 11a und FIG. 11b. Die Rolle 453 erreicht ihre Endposition an der Schräge 454 in der Endposition 436 der Wagen 431 auf den Schienen 432.

Durch das Hinwegheben der Abstreifplättchen 422 über den Mitnehmer 130 kann der Mitnehmer 130 nun unter den Abstreifplättchen 422 sowie dem Kratzbalken 420 und dem Träger 410 hindurchfahren. Nach dem Hindurchfahren schiebt der Mitnehmer 130 die Wagen 431 nicht mehr an. Nun werden durch die Rückstelleinrichtungen 460, welche freihängende Gewichte 461 umfassen, die durch Stahlseile an den Wagen 431 befestigt sind, die Wagen 431 aus ihrer Endposition 436 in ihre Ausgangsposition 435 zurückgezogen. Während des Zurückziehens wird die Schwenkbewegung SB des Trägers 410, die Linearbewegung L2 des Kratzbalkens 420 sowie die Linearbewegung L1 des Trägers 410 in umgekehrter Reihenfolge vollzogen. Sobald die Wagen 431 wieder ihre Ausgangsposition 435 eingenommen haben, steht die Abstreifvorrichtung 400 wieder für den nächsten Mitnehmer 130 bereit. Die Abstände zwischen den Mitnehmern 130 an der Förderstrecke 140 sind derart gewählt, dass jeder Mitnehmer 130 einen Abstreifprozess, umfassend die Linearbewegung L1 des Trägers 410, die Linearbewegung L2 des Kratzbalkens 420 und der Schwenkbewegung SB des Trägers 410 in beide Richtungen, durchlaufen kann, und die Abstreifvorrichtung 400 anschließend wieder für den nächsten Abstreifprozess am nächsten Mitnehmer 130 bereitsteht.

### Bezugszeichen liste

- 100: Höhenförderer
- 110: Materialaufnahme
- 120: Materialabgabe

- 130: Mitnehmer
- 131: Bodenfläche
- 132: Rückenfläche

- 140: Förderstrecke
- 141: Zuführstrecke
- 142: Rückführstrecke
- 143: Umlenkelement
- 144: Kette
- 145: Antriebseinheit
- 146: Vertikalabschnitt
- 147: Horizontalabschnitt

- 200: Lager
- 300: Trocknungsfläche
- 400: Abstreifvorrichtung
- 410: Träger

- 420: Kratzbalken
- 421: Abstreifplättchen
- 422: Abstreiffläche
- 423: Stirnfläche

- 430: erste Schiebeeinrichtung
- 431: Wagen
- 432: Schiene
- 433: Wagen-Schienen-Anordnung
- 434: Wagen-Schienen-Anordnung
- 435: Ausgangsposition
- 436: Endposition
- 437: Anschlag

- 440: zweite Schiebeeinrichtung
- 441: Kulissenführung
- 442: Verlängerung
- 443: Rolle
- 444: Führungskanal
- 445: erster Abschnitt
- 446: zweiter Abschnitt
- 447: dritter Abschnitt

- 450: Kippeinrichtung
- 451: Konturplatte
- 452: Hebel
- 453: Rolle
- 454: Schräge
- 456: erstes Ende
- 457: zweites Ende

- 460: Rückstelleinrichtung
- 461: Gewicht
- 462: Zugmittel
- 463: Umlenkrolle
- 464: Gewichtsführung

- FR: Förderrichtung
- L: Längsachse
- FW: Fahrtweg
- L1: Linearbewegung
- L2: Linearbewegung
- W: Winkel
- SB: Schwenkbewegung

## Patentansprüche

1. Höhenförderer (100) für eine Vorrichtung zum Trocknen von Material, wobei der Höhenförderer (100) zum Befördern des Materials von einem in vertikaler Erstreckung unten am Höhenförderer (100) angeordneten Lager (200) der Vorrichtung zu wenigstens einer in vertikaler Erstreckung oben am Höhenförderer angeordneten Trocknungsfläche (300) der Vorrichtung vorgesehen und/oder ausgebildet ist,
wobei der Höhenförderer (100) eine Materialaufnahme (110) in einem in vertikaler Erstreckung unteren Bereich und eine Materialabgabe (120) in einem in vertikaler Erstreckung oberen Bereich aufweist,
wobei der Höheförderer (100) wenigstens einen Mitnehmer (130) zur Mitnahme von Material und eine Förderstrecke (140) für den Mitnehmer (130) aufweist, wobei der Mitnehmer (130) an der Förderstrecke (14) angeordnet ist und mittels der Förderstrecke (140) in einer vorgesehenen Förderrichtung (FR) von der Materialaufnahme (110) zu der Materialabgabe (120) und von der Materialabgabe (120) zurück zur Materialaufnahme (110) befördert wird oder beförderbar ist,
wobei die Förderstrecke (140) eine Zuführstrecke (141) und eine Rückführstrecke (142) aufweist, wobei die Zuführstrecke (141) zwischen der Materialaufnahme (110) und der Materialabgabe (120) angeordnet ist und wobei die Rückführstrecke (142) zwischen der Materialabgabe (120) und der Materialaufnahme (110) angeordnet ist, so dass die Förderstrecke (140) einen Kreislauf ausbildet,
**dadurch gekennzeichnet, dass**
der Höhenförderer (100) eine Abstreifvorrichtung (400) zum Abstreifen von am oder auf dem Mitnehmer (130) befindlichem Material aufweist.

2. Höhenförderer nach Anspruch 1,
**dadurch gekennzeichnet, dass**
die Förderstrecke (140) einen Kettenantrieb umfasst, wobei der Kettenantrieb wenigstens zwei parallel verlaufende Ketten (144) und/oder eine Antriebseinheit (145) für die Ketten (144) und/oder ein oder mehrere Umlenkelemente (143) zum Umlenken der Ketten (144) aufweist.

3. Höhenförderer nach Anspruch 1 oder 2,
**dadurch gekennzeichnet, dass**
die Zuführstrecke (141) und/oder die Rückführstrecke (142) jeweils einen Vertikalabschnitt (146) und einen Horizontalabschnitt (147) aufweisen, wobei der Mitnehmer (130) im Vertikalabschnitt (146) der Zuführstrecke (141) von der Materialaufnahme (110) um eine vorgesehene Strecke vertikal befördert wird, und wobei der Horizontalabschnitt (147) der Zuführstrecke (141) sich an den Vertikalabschnitt (146) anschließt und der Mitnehmer (130) im Horizontalabschnitt (147) der Zuführstrecke (141) um eine vorgesehene Strecke horizontal hin zur Materialabgabe (120) befördert wird, und wobei der Mitnehmer (130) im Vertikalabschnitt (146) und im Horizontalabschnitt (147) der Rückführstrecke (142) von der Materialabgabe (120) zur Materialaufnahme (110) zurückbefördert wird.

4. Höhenförderer nach einem der vorhergehenden Ansprüche,
**dadurch gekennzeichnet, dass**
der Mitnehmer (130) schaufelartig ausgebildet ist, wobei der Mitnehmer (130) eine Bodenfläche (131) und Rückenfläche (132) aufweist, wobei vom Mitnehmer (130) aufgenommenes Material auf der Bodenfläche (131) aufliegt und/oder an der Rückenfläche (132) anliegt.

5. Höhenförderer nach einem der vorhergehenden Ansprüche,
**dadurch gekennzeichnet, dass**
die Abstreifvorrichtung (400) mechanisch ausgebildet ist und/oder keinen zusätzlichen Antrieb und/oder Motor aufweist.

6. Höhenförderer nach einem der vorhergehenden Ansprüche,
**dadurch gekennzeichnet, dass**
die Abstreifvorrichtung (400) in einem Endabschnitt der Zuführstrecke (141) und/oder in einem Bereich vor der Materialabgabe (120) am oder im Höhenförderer (100) angeordnet ist.

7. Höhenförderer nach einem der vorhergehenden Ansprüche,
**dadurch gekennzeichnet, dass**
die Abstreifvorrichtung (400) einen Träger (410) umfasst, wobei der Träger (410) senkrecht zur Förderrichtung (FR) und/oder parallel zu einem an der Förderstrecke (140) angeordnetem Mitnehmer (130) angeordnet ist.

8. Höhenförderer nach einem der vorhergehenden Ansprüche,
**dadurch gekennzeichnet, dass**
die Abstreifvorrichtung (400) einen Kratzbalken (420) umfasst, wobei an dem Kratzbalken (420) mehrere Abstreifplättchen (421) mit je einer Abstreiffläche (422) angeordnet sind, wobei die Abstreifflächen (422) senkrecht zur Längsachse (L) des Kratzbalkens (420) angeordnet sind, wobei die Abstreifflächen (422) zum Abstreifen des Mitnehmers (130) vorgesehen sind.

9. Höhenförderer nach Anspruch 7 und 8,
**dadurch gekennzeichnet, dass**
der Kratzbalken (420) verschiebbar an dem Träger (410) angeordnet ist, wobei der Kratzbalken (420) parallel zu und/oder entlang der Längsachse (L) des Trägers (410) relativ zum Träger (410) verschiebbar ist.

10. Höhenförderer nach einem der vorhergehenden Ansprüche,
**dadurch gekennzeichnet, dass**
die Abstreifvorrichtung (400) eine erste Schiebeeinrichtung (430) umfasst, wobei die erste Schiebeeinrichtung (430) zwei Wagen (431) und eine oder mehrere Schienen (432) pro Wagen (431) umfasst, wobei jeder Wagen (431) an einer oder mehrerer der Schienen (432) verfahrbar angeordnet ist, wobei die zwei Wagen-Schienen-Anordnungen (433; 434) an zwei gegenüberliegenden Seiten seitlich neben der Förderstrecke (140) angeordnet sind, wobei die Schienen (432) parallel zur Förderrichtung (FR) ausgerichtet sind, und wobei jeder Wagen (431) zwischen einer Ausgangsposition (435) an einem ersten, in Förderrichtung (FR) hinten gelegenen Ende der Schiene oder Schienen (432) und einer Endposition (436) an einem zweiten, in Förderrichtung (FR) vorne gelegenen Ende der Schiene oder Schienen (432) entlang eines vorgesehenen Fahrtwegs (FW) verfahrbar ist.

11. Höhenförderer nach Anspruch 7 und 10,
**dadurch gekennzeichnet, dass**
die erste Schiebevorrichtung (430) zum Schieben des Trägers (410) in Förderrichtung (FR) vorgesehen und/oder ausgebildet ist, wobei der Träger (410) zwischen den beiden Wagen (431) der Abstreifvorrichtung (400) angeordnet und/oder an jedem der Wagen (431) gelagert ist, wobei der Mitnehmer (130) und die Wagen (431) vertikal derart relativ zueinander im Höhenförderer (100) angeordnet sind, dass der Mitnehmer (130) im Bereich des Fahrtwegs (FW) mit den Wagen (431) auf zumindest annähernd selber Höhe liegt, so dass der Mitnehmer (130) indirekt an den Träger (410) anstößt, indem der Mitnehmer (130) im Bereich des Fahrtwegs (FR) an zwei Anschläge (437) anstößt, die jeweils an einem der beiden Wagen (431) angeordnet sind, wobei durch die Bewegung des Mitnehmers (130) in Förderrichtung (FR) eine Linearbewegung (L1) des Trägers (410) entlang des vorgesehenen Fahrtwegs (FW) erzeugt wird, indem die Wagen (431) durch den Mitnehmer (130) von der Ausgangsposition (435) hin zur Endposition (436) geschoben werden.

12. Höhenförderer nach Anspruch 8,
**dadurch gekennzeichnet, dass**
die Abstreifvorrichtung (400) eine zweite Schiebeeinrichtung (440) umfasst, wobei mittels der zweiten Schiebeeinrichtung (440) eine Linearbewegung (L2) des Kratzbalkens (420) senkrecht zur Förderrichtung (FR) erzeugt wird, so dass die Abstreifflächen (422) der Abstreifplättchen (421) zur Erzeugung einer Abstreifbewegung an dem Mitnehmer (130) entlang bewegt werden oder bewegbar sind.

13. Höhenförderer nach Anspruch 12,
**dadurch gekennzeichnet, dass**
die zweite Schiebeeinrichtung (440) eine Kulissenführung (441) umfasst oder durch eine Kulissenführung (441) ausgebildet ist, wobei die Kulissenführung (441) seitlich neben der Förderstrecke (140) am oder im Höhenförderer (100) angeordnet.

14. Höhenförderer nach Anspruch 13,
**dadurch gekennzeichnet,**
**dass** der Kratzbalken (420) eine Rolle (443) und die Kulissenführung (441) einen Führungskanal (444) zur Führung der Rolle (443) aufweist, wobei die Rolle (443) in dem Führungskanal (444) angeordnet oder anordenbar ist, und wobei der Führungskanal (444) in wenigstens einem ersten Abschnitt (445) parallel zur Förderrichtung (FR) verläuft und in wenigstens einem zweiten Abschnitt um einen vorgesehenen Winkel (W) geneigt zur Förderrichtung (FR) und von der Förderstrecke (140) wegorientiert verläuft, wobei die Rolle (443) durch eine Bewegung des Kratzbalkens (420) in Förderrichtung (FR) durch den Führungskanal (444) bewegt wird oder bewegbar ist, wobei die Rolle (443) bei dieser Bewegung im zweiten Abschnitt (446) des Führungskanals (444) den Kratzbalken (420) seitlich mitzieht, so dass eine Linearbewegung (L2) des Kratzbalkens (420) senkrecht zur Förderrichtung (FR) erzeugt wird.

15. Höhenförderer nach Anspruch 7,
**dadurch gekennzeichnet, dass**
die Abstreifvorrichtung (400) wenigstens eine Kippeinrichtung (450) umfasst, wobei die Kippeinrichtung (450) oder die Kippeinrichtungen (450) eine Schwenkbewegung (SB) des Trägers (410) nach oben erzeugen, wobei der Träger (410) durch die Schwenkbewegung (SB) über den Mitnehmer (130) hinweg geschwenkt wird oder hinweg schwenkbar ist.

16. Höhenförderer nach Anspruch 15,
**dadurch gekennzeichnet, dass**
die oder jede Kippeinrichtung (450) wenigstens eine Konturplatte (451) und einen korrespondierenden Hebel (452) umfasst, wobei der Hebel (452) an einem ersten Ende (456) an dem Träger (410) angeordnet ist, wobei der Träger (410) drehbar gelagert ist, und wobei der Hebel (452) an einem dem ersten Ende (456) gegenüberliegenden zweiten Ende (457) eine Rolle (453) aufweist, wobei die Rolle (453) zum Abfahren der Konturplatte (451) vorgesehen ist, wobei die Konturplatte (451) in Förderrichtung betrachtet eine Schräge (454) nach unten aufweist, wobei der Hebel (452) beim Abfahren der Schräge (454) der Konturplatte (451) mit der Rolle (453) an dem zweiten Ende (457) nach unten gedrückt wird oder nach unten drückbar ist, so dass der Träger (410) nach oben geschwenkt wird.

17. Höhenförderer nach Anspruch 10,
**dadurch gekennzeichnet, dass**
die Abstreifvorrichtung (440) wenigstens eine Rückstelleinrichtung (460) umfasst, wobei mittels der Rückstelleinrichtung (460) die Wagen (431) der ersten Schiebeeinrichtung (430) aus ihrer Endposition (436) in ihre Ausgangsposition (435) zurückgeführt werden oder rückführbar sind.

18. Höhenförderer nach Anspruch 17,
**dadurch gekennzeichnet, dass**
die Rückstelleinrichtung (460) wenigstens ein freihängendes Gewicht (461) und wenigstens ein Zugmittel (462) umfasst, wobei das wenigstens eine freihängende Gewicht (461) mittels des Zugmittels (462) mit einem Wagen (431) der ersten Schiebevorrichtung (430) verbunden ist, wobei das freihängende Gewicht (461) den Wagen (431) entgegen des Fahrtwegs (FW) in seine Ausgangsposition (435) zurückzieht.

19. Vorrichtung zum Trocken zum Trocknen von Material, umfassend ein Lager (200) für das Material und eine Trocknungsfläche (300) für das Material,
**dadurch gekennzeichnet, dass**
die Vorrichtung einen Höhenförderer (100) nach einem der vorhergehenden Ansprüche umfasst.
